(19) Europäisches Patentamt
European Patent Office
Office européen des brevets

(11) Publication number: **0 263 195 B1**

(12) # EUROPEAN PATENT SPECIFICATION

(45) Date of publication of patent specification: 06.03.91

(51) Int. Cl.⁵: **B01D 53/30**, B01D 53/36, F23J 15/00

(21) Application number: **86113908.7**

(22) Date of filing: **07.10.86**

Divisional application 89111243.5 filed on 07/10/86.

(54) Method and apparatus for controlling denitration of exhaust gas.

(43) Date of publication of application:
**13.04.88 Bulletin 88/15**

(45) Publication of the grant of the patent:
**06.03.91 Bulletin 91/10**

(84) Designated Contracting States:
**DE FR GB SE**

(56) References cited:
**DE-A- 2 657 617**
**DE-A- 2 902 706**
**DE-A- 3 337 793**

**PATENT ABSTRACTS OF JAPAN, vol. 9, no. 138 (C-286)[1861], 13th June 1985; & JP - A - 60 25528 (HITACHI PLANT KENSETSU) 08-02-1985**

(73) Proprietor: **NIPPON KOKAN KABUSHIKI KAISHA**
**1-2 Marunouchi 1-chome Chiyoda-ku Tokyo 100(JP)**

(72) Inventor: **Ase, Hajime c/o Patent Division NIPPON KOKAN K.K. 1-2, 1-chome, Marunouchi Chiyoda-ku Tokyo(JP)**

(74) Representative: **Popp, Eugen, Dr. et al MEISSNER, BOLTE & PARTNER Widenmayerstrasse 48 Postfach 86 06 24 W-8000 München 86(DE)**

**Description**

This invention relates to a method and apparatus for reducing the amount of nitrogen oxide NOx discharged from a refuse incinerator into the atmosphere, according to the preamble of claim 1 and claim 2, respectively.

As is well known in the art, when refuse is burned in an incinerator, nitrogen oxide NOx is discharged into atmosphere, giving rise to pollution problems. To reduce the nitrogen oxide $NO_X$, ammonia $NH_3$ is injected into the high temperature exhaust gds at the outlet of the refuse incinerator. However, the amount of nitrogen oxide discharged from the refuse incinerator varies continuously, depending on the kind and amount of refuse desposited in the incinerator. Therefore, if a method of injecting a constant amount of ammonia is employed, it is sometimes possible that the permissible level of NOx discharge is exceeded.

From the DE-A-2 657 617 are known a method and device for reducing the amount of nitrogen oxide NOx by injecting ammonia $NH_3$. Therefore, it is proposed in the said document to control the actual amount of $NO_x$ as well as oxygene concentration in the exhaust gas, wherein the information of the rate of air supplied into the incinerator, the information of the rate of fuel, and the information of the $CO_2$-concentration in the exhaust gas are taken into account.

Also the DE-A-3 337 793 refers to a method for reducing the amount of nitrogen oxide $NO_x$ by injecting ammonia $NH_3$. This method includes a contiol of the concentrations of $NO_x$ and 1supplied air at a point before a catalyst for a catalytic denitration reaction between $NO_x$ and $NH_3$. As this reaction depends on the temperature, because the activity of the catalyst depends on the temperature, said method includes also the step of controlling the gas temperature before the said catalyst.

The DE-A-2 902 706 also proclaims a method for denitration of exhaust gas by a catalytic reaction between $NO_x$ and $NH_3$. Also this method includes the measurement of the temperature of the exhaust gas, because a decrease of the temperature results in an increase of the amount of absorbed $NH_3$ at the surface of the catalyst.

An object of the present invention is to provide a method and an apparatus for denitrating exhaust gas by non-catalytic reaction between $NO_x$ and $NH_3$ which can control the amount of nitrogen oxide discharged from an incinerator to a rate below the permissible limit by controlling the injection amount of ammonia to an optimum value at a minimum time delay or process delay from the instant the ammonia $NH_3$ is injected until the results of measurement of the nitrogen oxide are determined, and thereby optimize the refuse incinerator operating costs.

The aforementioned object of the invention is solved by the features of the characterizing part of claim 1 and claim 2, respectively.

The present invention avoids any consumption of a catalyst, and further is characterized by a rather instantaneous process control.

This invention can be more fully understood from the following detailed description when taken in conjunction with the accompanying drawings, in which:

Fig. 1 is a block diagram showing am embodiment of the exhaust gas denitration apparatus according to the invention;

Fig. 2 is a graph showing the relation between the temperature of an ammonia injection section and denitration factor;

Fig. 3 is a graph showing the relation between the temperature of the ammonia injection section an dprocess delay;

Fig. 4 is a flow chart for explaining the operation of devices for generating estimated generated $NO_x$ amount output and injection amount feedforward output shown in Fig. 1;

Fig. 5 is a graph showing the relation between the injection amount of ammonia and generated $NO_x$ in the embodiment of Fig. 1 taken along time axis.

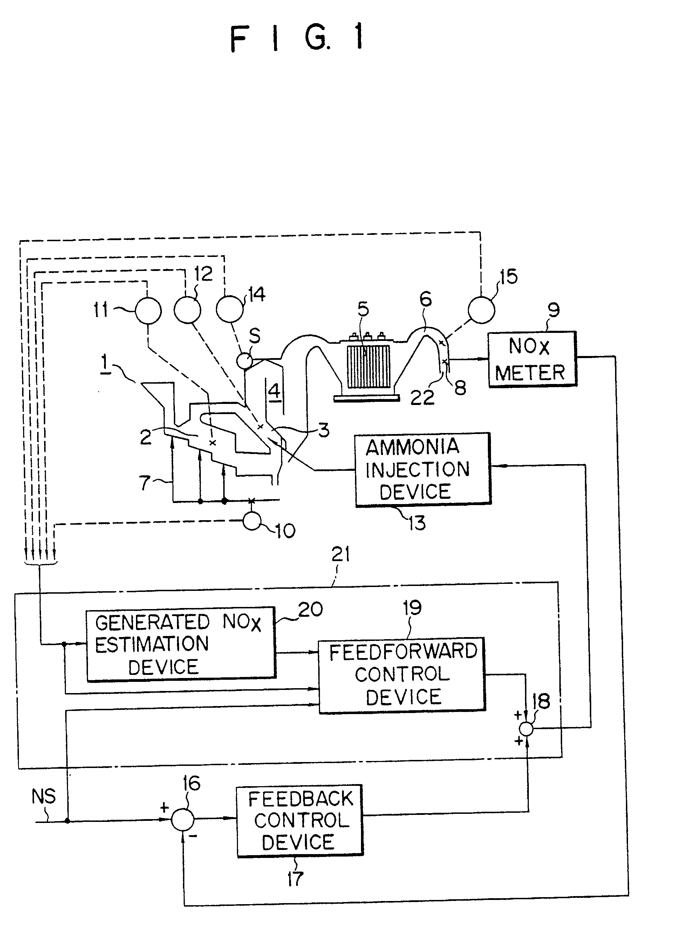

Now, a preferred embodiment of the invention will be described in detail with reference to the drawings. Referring to Fig. 1, there is shown a refuse incinerator. Incinerator body 1 includes burning chamber 2, ammonia injection section 3, heat exchange section 4, electric dust collection section 5 and exhaust gas detection section 6. Refuse is deposited into burning chamber 2 through refuse inlet (not shown). The refuse is then burnt with air supplied from air supply unit 7. High temperature gas produced as a result of the burning is passed through ammonia injection section 3 to heat exchange section 4. In heat exchange section 4, steam is generated by utilizing the heat of the high temperature exhaust gas, and the steam is then supplied to the outside for power generation, for instance. The exhaust gas, having been reduced in temperature, is fed to dust collector 5 for dust collection and then fed to exhaust gas detection section 6. In exhaust gas detection section 6 a $NO_x$ detector element 8 is provided, and a detection output thereof is fed to $NO_x$ meter 9. $NO_x$meter 9 provides output data which represents the concentration of $NO_x$ in the

exhaust gas from detection section 6.

The flow rate of air supplied from air supply unit 7 into burning chamber 2 is measured by air flow meter 10. A temperature sensor element is provided in burning chamber 2, and thermometer 11, coupled to the temperature sensor element, provides incinerator interior temperature output. In high temperature ammonia injection section 3, a temperature sensor element coupled to thermometer 12 is provided to measure the temperature of a zone where ammonia injected from ammonia injection device 13 reacts with $NO_x$ in exhaust gas.

The flow rate of steam from heat exchange section 4 is detected by flow meter 14. In exhaust gas detection section 6 oxygen concentration meter 15 is provided to detect the concentration of oxygen in the exhaust gas in exhaust gas detection section 6.

The output of $NO_x$ meter 9 is fed to a minus terminal of subtractor 16. $NO_x$ setting signal NS is fed to a plus terminal of subtractor 16. The difference signal from subtractor 16 is fed to an input terminal of ammonia injection amount feedback control device 17. Control device 17 provides an output representing an amount of $NH_3$ to be injected, such that the $NO_x$ concentration in the exhaust gas becomes the set value NS. The injection amount control signal obtained from control device 17 through calculation is fed to one input terminal of adder 18 to be added to the output of injection amount feedforward control device 19 fed to the other input terminal of adder 18. The sum output of adder 18 is fed to the input terminal of ammonia injection device 13.

Feedforward control device 19 rec eives set value NS and output from generated $NO_x$ estimation device 20 along with the outputs of air flow meter 10, burning chamber thermometer 11, ammonia injection section thermometer 12, steam flow meter 14 and exhaust gas oxygen concentration meter 15, and feeds its output to adder 18. The outputs of measuring elements 10 to 12, 14 and 15 are also fed to $NO_x$ concentration estimation device 20. Control devices 17 and 19 and estimation device 20 will be described later in detail.

While in Fig. 1 individual circuit elements 16 to 20 are shown as independent circuits, actually a microcomputer, for instance, is used, which is programmed to execute the functions of these elements 16 to 20. Of these elements, adder 18, injection amount feedforward control device 19 and generated $NO_x$ amount estimation device 20 constitute ammonia injection amount control circuit 21.

The air supply rate, burning chamber temperature, ammonia injection section temperature, steam generation rate and residual oxygen concentration, detected by measuring elements 10 to 12, 14 and 15, all including information concerning the operation of the incinerator or the amount of generated $NO_x$ is detected. These detection information is fed to generated $NO_x$ estimation device 20 for estimating the generated $NO_x$ amount or concentration $\widehat{y_0}$. Estimation device 20 contains a statistical mathematical model of $NO_x$ generation, and the generated $NO_x$ amount is calculated from information on the basis of the mathematical model. The equation for calculation is

$$
\begin{aligned}
\widehat{y_0} = {} & a_{10}x_1 + a_{20}x_2 + a_{30}x_3 + a_{40}x_4 + a_{50}x_5 \\
& + a_{01}\widehat{y_0}(1) + a_{11}x_1(1) + a_{21}x_2(1) + a_{31}x_3(1) \\
& + a_{41}x_4(1) + a_{31}x_3(1) \\
& + a_{02}\widehat{y_0}(2) + a_{21}x(2) + \ldots \qquad \ldots (1)
\end{aligned}
$$

where $\widehat{y_0}$ is the estimated amount of generated $NO_x$, x1 is the supply rate of air for burning, $x_2$ is the incinerator inside temperature, X3 is the incinerator outlet temperature, $x_4$ is the oxygen concentration in the exhaust gas, and $x_5$ is the flow rate of steam. aij (i, j = 1, 2, 3, ...) is a factor, m (m = 1, 2, 3, ...) is the data m cycles before, and ( ) is the present data.

Injection feedforward control device 19 receives data of the estimated amount of $NO_x$ from generated $NO_x$ estimation device 20 and calculates the necessary amount of $NH_3$ to feed a corresponding control signal to adder 18. The equation for calculation used is

$$
\eta = f(\gamma, T) \qquad \ldots (2)
$$

with denitration factor given as

$$\eta = (\widehat{y_0} - y)/\widehat{y_0}$$
$$\text{and} \quad Y = NH_3/y$$

where T is the temperature of the $NH_3$ injection zone (temperature at the incinerator outlet), y0 is the amount of generated $NO_x$, y is the amount of $NO_x$ after denitration reaction, and Y is expressed as mole ratio.

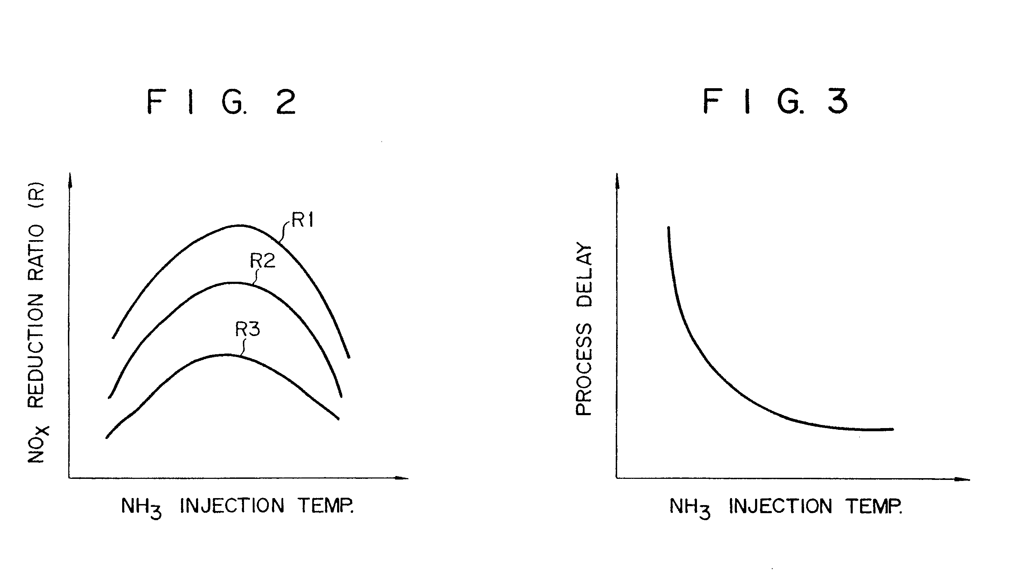

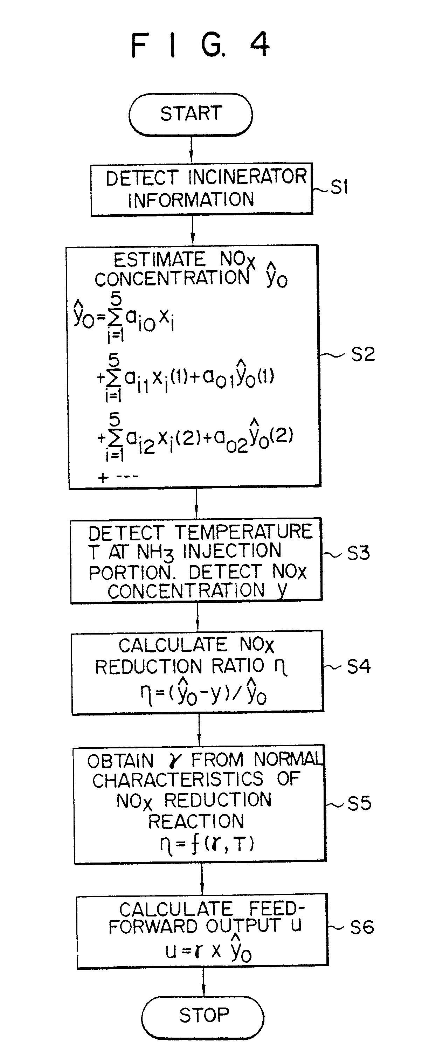

The characteristic of the non-catalytic denitration reaction between $NO_x$ and $NH_3$ varies greatly depending on temperature conditions and the amount of $NO_x$ generated in the burning state. Fig. 2 shows a relation between the temperature of $NH_3$ injection section 3 and the denitration factor, and Fig. 3 shows a relation between the temperature of $NH_3$ injection section 3 and the delay of process. In Fig. 2, R1 to R3 show ratios of $NH_3/NO_x$. As is seen from Fig. 2, the denitration factor R is increased with an increasing $NH_3$ amount for the same amount of $NO_x$. With temperature variations, however, the denitration factor is reduced even when the $NH_3$ amount is high. Further, as is seen from Fig. 3, the delay of process varies greatly with temperature variations.

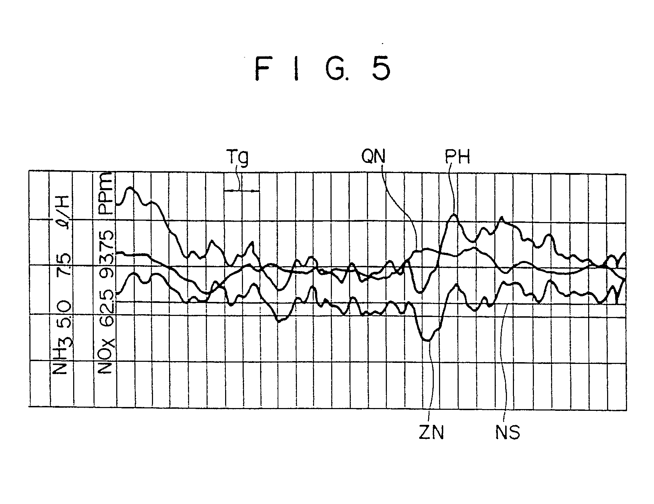

The operation of the apparatus having the above construction will now be described with reference to Fig. 4. When various ki nds of refuse are deposited into the incinerator and burned with air supplied to the incinerator, $NO_x$ is generated as a result of this burning, and exhaust gas containing $NO_x$ is discharged from incinerator outlet 22. In step S1, various information is gathered. Exhaust gas $NO_x$ meter 9 detects the concentration of $NO_x$ in exhaust gas and feeds a measurement signal to subtractor 16. Subtractor 16 also receives data of set value NS of nitrogen oxide and feeds difference data to injection feedback control device 17. Injection feedback control device 17 feeds to adder 18 an injection control signal for making the input difference signal zero, i.e., making the $NO_x$ concentration in the exhaust gas to be the set value NS of nitrogen oxide. For example, a signal may be read out from a ROM in a microcomputer with the output of subtractor 16 as an address signal.

Meanwhile, a temperature detection signal from incinerator interior thermometer 11, temperature detection signal from furnace outlet thermometer 12, flow detection signal from burning air flow meter 10, concentration detection signal from exhaust gas oxygen concentration meter 15 and flow detection signal from steam flow meter 14 are fed to generated $NO_x$ estimation device 20. Generated $NO_x$ estimation device 20 receives individual burning data and calculates, in step S2, the estimated amount of generated $NO_x$ using equation (1), the estimated amount signal being fed to injection feedforward control device 19. In step S3, control device 19 detects temperature T of injection section 3 and $NO_x$ concentration y and receives data of the estimated amount of generated $NO_x$. In step S4, it calculates denitration factor $\eta$ using equation (2), and in step S5 it obtains Y from the relation $\eta = f(Y,T)$. In subsequent step S6, it obtains the necessary amount u of $NH_3$ to be injected by executing the equation $u = \gamma \times \widehat{y_0}$ and feeds a corresponding control signal to adder 18. Thus, adder 18 feeds an $NH_3$ amount control signal corresponding to the current amount of $NO_x$ to be removed to ammonia injection device 13. In the above operation, a result of control as shown in Fig. 5 can be obtained. In Fig. 5, QN shows the estimated amount of generated $NO_x$, PH shows the amount of $NH_3$ to be injected, ZN shows the concentration of $NO_x$ in the exhaust gas. Thus, the concentration of $NO_x$ in the exhaust gas is substantially controlled to the set value NS average value for 70 minutes. Tg in Fig. 5 shows five minutes.

As has been shown, in the above embodiment individual burning status information is received and the estimated amount of generated $NO_x$ is obtained from an $NO_x$ generation function, and a control signal based on the estimated amount is added to an injection control signal to produce an $NH_3$ injection amount control signal. Thus, it is possible to make the amount of $NO_x$ to the set value NS, i.e., to be below a limit, without causing any delay of process. In addition, since the estimated amount of generated $NO_x$ is added, it is possible to make the injection amount of $NH_3$ to be a necessary and sufficient value for the removal of $NO_x$.

## Claims

1. A method of denitrating exhaust gas, comprising the steps of:
   obtaining information concerning a burning status in an incinerator related to the amount of nitrogen oxide discharged from said incinerator; obtaining information of the rate of air supplied into said incinerator; and controlling the amount of ammonia injected into said incinerator according to the said informations, characterized in that said information concerning the burning status in the incinerator includes information of the temperature of a zone in said incinerator, into which ammonia is injected, and information concerning the temperature of a burning chamber of said incinerator.

2. An apparatus for denitrating exhaust gas, comprising: means (8,9) for detecting the concentration of nitrogen oxide in an exhaust gas from an incinerator (1); means for obtaining information concerning the burning status of said incinerator related to the amount of generated nitrogen oxide, including air flow detection means (10) for detecting the rate of flow of supplied air for burning;

means (21,30) for determining the amount of ammonia to be injected according to the obtained informations; and means (13) for injecting ammonia into said incinerator (1) according to the determined amount of injection, characterized in that said means for obtaining information includes:

first temperature detection means (12) for detecting the temperature of a zone (3), into which said ammonia is injected; and

second temperature detection means (11) for detecting the temperature of the incinerator interior (2).

3. The apparatus according to claim 2, characterized in that said means (21) for determining the amount of ammonia includes:

means (20) for estimating the amount of generated nitrogen oxide according to said obtained information; feedforward control means (19) for determining a first injection amount of ammonia by receiving data of the estimated amount of generated nitrogen oxide from said estimating means (20), obtained information and data of a set value of generated nitrogen oxide;

means (16) for obtaining a difference between said set value of generated nitrogen oxide and detected nitrogen oxide concentration;

feedback control means (17) for determining a second injection amount of ammonia according to said difference; and

means (18) for determining a third injection amount of ammonia according to said first and second injection amounts of ammonia.

## Revendications

1. Une méthode de dénitration des gaz de combustion, comprenant les étapes suivantes :

obtention de l'information contenant l'état de combustion dans un incinérateur ayant rapport à la quantité d'oxyde d'azote déchargé dudit incinérateur ;

obtention de l'information du débit d'air fourni dans ledit incinérateur ; et contrôle de la quantité d'ammoniac injecté dans ledit incinérateur conformément auxdites informations, caractérisée en ce que ladite information concernant l'état de combustion dans l'incinérateur inclut l'information de la température d'une zone dans ledit incinérateur, dans laquelle l'ammoniac est injecté et l'information concernant la température d'une chambre de combustion dudit incinérateur.

2. Un appareil pour la dénitration des gaz de combustion comprenant :

des dispositifs (8, 9) pour détecter la concentration de l'oxyde d'azote dans un gaz de combustion provenant d'un incinérateur (1) ;

un dispositif pour l'obtention de l'information concernant l'état de combustion dudit incinérateur ayant rapport à la quantité d'oxyde d'azote généré, incluant le dispositif de détection de débit d'air (10) pour détecter le débit d'écoulement de l'air alimenté pour la combustion ;

des dispositifs (21, 30) pour déterminer la quantité d'ammoniac à injecter conformément aux informations obtenues ; et un dispositif (13) pour l'injection de l'ammoniac dans ledit incinérateur (1) conformément à la quantité d'injection déterminée, caractérisé en ce que ledit dispositif pour obtenir l'information inclut :

un premier dispositif de détection de la température (12) pour détecter la température d'une zone (3) dans laquelle ledit ammoniac est injecté ; et

un second dispositif de détection de la température (11) pour détecter la température de l'intérieur de l'incinérateur (2).

3. L'appareil selon la revendication 2, caractérisé en ce que ledit dispositif (21) pour déterminer la quantité d'ammoniac inclut :

un dispositif (20) pour estimer la quantité d'oxyde d'azote généré conformément à ladite informa-

EP 0 263 195 B1

tion obtenue ;

un dispositif de contrôle à action directe (19) pour déterminer une première quantité d'injection de l'ammoniac par réception des données de la quantité estimée d'oxyde d'azote généré à partir dudit dispositif d'estimation (20), l'information et les données obtenues d'une valeur fixée de l'oxyde d'azote généré ;

un dispositif (16) pour obtenir une différence entre ladite valeur fixée de l'oxyde d'azote généré et la concentration de l'oxyde d'azote détecté ;

un dispositif de contrôle de réinjection (17) pour déterminer une seconde quantité d'injection d'ammoniac conformément à cette différence ; et

un dispositif (18) pour déterminer une troisième quantité d'injection d'ammoniac conformément auxdites première et seconde quantités d'injection d'ammoniac.

## Ansprüche

1. Verfahren zum Denitrieren von Abgas, umfassend die folgenden Schritte:
Gewinnen von Information über einen Verbrennungszustand in einer Verbrennungsanlage, die auf die aus der Verbrennungsanlage ausgetragene Stickoxidmenge bezogen ist; Gewinnen von Information über den Durchsatz von der Verbrennungsanlage zugeführter Luft; und Einstellen der in die Verbrennungsanlage eingespritzten Ammoniakmenge nach Maßgabe der Informationen, dadurch gekennzeichnet, daß die Information über den Verbrennungszustand in der Verbrennungsanlage Information über die Temperatur einer Zone dieser Anlage, in die Ammoniak eingespritzt wird, sowie Information über die Temperatur eines Brennraums der Verbrennungsanlage enthält.

2. Vorrichtung zum Denitrieren von Abgas, umfassend: Einrichtungen (8, 9), die die Stickoxidkonzentration in einem Abgas aus einer Verbrennungsanlage (1) detektieren;
eine Einrichtung, die auf die erzeugte Stickoxidmenge bezogene Information über den Verbrennungszustand der Verbrennungsanlage gewinnt und einen Luftdurchflußdetektor (10) aufweist, der die Durchflußmenge von zur Verbrennung zugeführter Luft detektiert;
eine Einrichtung (21, 30), die die einzuspritzende Ammoniakmenge nach Maßgabe der gewonnenen Informationen bestimmt; und
eine Einrichtung (13), die in die Verbrennungsanlage (1) nach Maßgabe der bestimmten Einspritzmenge Ammoniak einspritzt,
dadurch gekennzeichnet, daß die Einrichtung zur Gewinnung von Information aufweist:
einen ersten Temperaturdetektor (12), der die Temperatur einer Zone (3), in die Ammoniak eingespritzt wird, detektiert; und
einen zweiten Temperaturdetektor (11), der die Temperatur des Innenraums (2) der Verbrennungsanlage detektiert.

3. Vorrichtung nach Anspruch 2, dadurch gekennzeichnet, daß die Einrichtung (21) zum Bestimmen der Ammoniakmenge aufweist:
eine Einheit (20), die die erzeugte Stickoxidmenge nach Maßgabe der gewonnenen Information schätzt;
eine Vorwärtsregeleinheit (19), die Daten bezüglich der geschätzten erzeugten Stickoxidmenge von der Schätzeinheit (20), gewonnene Information und Daten einer Führungsgröße des erzeugten Stickoxids empfängt und daraus eine erste Ammoniakeinspritzmenge bestimmt;
eine Einheit (16), die eine Differenz zwischen der Führungsgröße von erzeugtem Stickoxid und der detektierten Stickoxidkonzentration bildet;
eine Rückführregeleinheit (17), die nach Maßgabe der Differenz eine zweite Ammoniakeinspritzmenge bestimmt; und
eine Einheit (18), die nach Maßgabe der ersten und zweiten Ammoniakeinspritzmengen eine dritte Ammoniakeinspritzmenge bestimmt.

6

# F I G. 1

F I G. 2

NO$_X$ REDUCTION RATIO (R)

R1
R2
R3

NH$_3$ INJECTION TEMP.

F I G. 3

PROCESS DELAY

NH$_3$ INJECTION TEMP.

EP 0 263 195 B1

# F I G. 4

START

DETECT INCINERATOR INFORMATION — S1

ESTIMATE NO$_X$ CONCENTRATION $\hat{y}_O$

$$\hat{y}_O = \sum_{i=1}^{5} a_{iO} x_i$$

$$+ \sum_{i=1}^{5} a_{i1} x_i(1) + a_{O1} \hat{y}_O(1)$$

$$+ \sum_{i=1}^{5} a_{i2} x_i(2) + a_{O2} \hat{y}_O(2)$$

$$+ \cdots$$

— S2

DETECT TEMPERATURE T AT NH$_3$ INJECTION PORTION. DETECT NO$_X$ CONCENTRATION y — S3

CALCULATE NO$_X$ REDUCTION RATIO $\eta$

$$\eta = (\hat{y}_O - y) / \hat{y}_O$$

— S4

OBTAIN $\gamma$ FROM NORMAL CHARACTERISTICS OF NO$_X$ REDUCTION REACTION

$$\eta = f(\gamma, T)$$

— S5

CALCULATE FEED-FORWARD OUTPUT u

$$u = \gamma \times \hat{y}_O$$

— S6

STOP

9

# F I G. 5